# NEUE EUROPÄISCHE PATENTSCHRIFT

(11) **EP 1 409 162 B2**
(45) Veröffentlichungstag und Bekanntmachung des Hinweises auf die Entscheidung über den Einspruch: **04.01.2017**
(45) Hinweis auf die Patenterteilung: 18.03.2009
(21) Anmeldenummer: 01994786.0
(22) Anmeldetag: 13.12.2001
(51) Int. Cl.: B08B 3/04, B22D 31/00

(54) **VERFAHREN UND VORRICHTUNG ZUM IMPRÄGNIEREN PORÖSER GEGENSTÄNDE**
METHOD AND DEVICE FOR IMPREGNATING POROUS OBJECTS
PROCEDE ET DISPOSITIF POUR IMPREGNER DES OBJETS POREUX

(30) Priorität: 14.12.2000 DE 10062316
(43) Veröffentlichungstag der Anmeldung: 21.04.2004
(73) Patentinhaber: Internationale Metall Imprägnier GmbH, 40789 Monheim am Rhein (DE)
(72) Erfinder: GLÜCKS, Gabriele, 40764 Langenfeld (DE)
(74) Vertreter: Gille Hrabal
(86) Internationale Anmeldenummer: PCT/EP2001/014722
(87) Internationale Veröffentlichungsnummer: WO 2002/047833

(56) Entgegenhaltungen:
- DE-A- 3 215 395
- FR-A- 2 147 387
- GB-A- 1 547 801
- JP-A- H04 243 506
- US-A- 4 773 941
- US-A- 5 126 416
- US-A- 6 143 087

## Beschreibung

Die Erfindung betrifft ein Verfahren und eine Vorrichtung zum Imprägnieren eines porösen Gegenstands mit einem wärmehärtbaren Imprägniermittel, bei dem der Imprägniermittelüberschuß von der Oberfläche des Gegenstands abgewaschen und abgespült wird, worauf die Aushärtung des Imprägniermittels durch Erwärmen erfolgt. Das Verfahren ist insbesondere zum Imprägnieren von Metallteilen, Metallgussteilen, Mineralstoffgemischen, Holz, sowie anderen porösen Materialien geeignet.

Imprägnierverfahren dieser Art sind seit langem, beispielsweise aus der GB-Patentschrift 1,547,801 bekannt. Es werden wärmehärtbare Imprägniermittel, beispielsweise auf Polyesterbasis, insbesondere jedoch auf der Basis von (Meth)acrylaten eingesetzt. Typischerweise werden nach den Stand der Technik die zu imprägnierenden porösen Gegenstände mit einem flüssigen, wärmehärtbaren Imprägniermittel imprägniert, worauf der Imprägniermittelüberschuß von der Oberfläche des Gegenstandes mit Wasser in Gegnwart von oberflächenaktiven Mitteln abgewaschen, anschließend eine Spülung mit Wasser ohne Zusatz von oberflächenaktiven Mitteln erfolgt und schließlich das Imprägniermittel durch Erwärmen, insbesondere im Wasserbad (Polymerisationsbad), ausgehärtet wird. Zur Erleichterung der Auflösung des Imprägniermittelüberschusses wird empfohlen auch dem Imprägniermittel oberflächenaktive Mittel zuzusetzen, sowie in dem Imprägniermittel ein oder mehrere wasserlösliche Monomere zu verwenden. So enthalten handelsübliche Imprägniermittel heute Tenside und wasserlösliche Monomere, wie beispielsweise Hydroxypropylmethacrylat, das eine Löslichkeit von etwa 15 Gew.-% in Wasser (20°C) hat. Es hat sich gezeigt, dass bei der bisherigen Verfahrensweise Anteile bis zu 25 Gew.-% der entfernten überschüssigen Anteile des Imprägniermittels in dem Waschwasser gelöst werden. Die Folge ist eine Verschleppung in nachfolgende Bäder und die Ausfällung im Polymerisationsbad, was zur Verschmutzung der Oberflächen der imprägnierten Gegenstände und der Bäder führt. Aus diesem Grunde müssen die Bäder einer konventionellen Anlage regelmäßig verworfen werden. Auch verarmen die Imprägniermittelüberschüsse an bestimmten Monomeranteilen, so dass sie nur mit Aufbereitungsvorgängen wieder für die Imprägnierung eingesetzt werden können.

Aufgabe der vorliegenden Erfindung ist die Bereitstellung eines Verfahrens und einer Vorrichtung zum Imprägnieren von Poren enthaltenden Gegenständen mit einem flüssigen Imprägniermittel, bei dem die Anreicherung der Waschwässer mit Imprägniermittel weitgehend vermieden wird, so dass die Waschwässer langfristig verwendet werden können und bei dem eine Recyclisierung der von den imprägnierten Gegenständen entfernten überschüssigen Imprägnierungsmittel ohne aufwendige Aufbereitung möglich ist.

Es hat sich gezeigt, dass diese Aufgabe gelöst werden kann durch das einen Gegenstand der Erfindung bildende Verfahren zum Imprägnieren eines Poren aufweisenden Gegenstandes durch Einbringen eines flüssigen, wärmehärtbaren Imprägniermittels, das im wesentlichen frei von wasserlöslichen Anteilen ist; in die Poren, Abwaschen von überschüssigem Imprägniermittel von der Oberfläche mit Wasser und Aushärten des Imprägniermittels durch Erwärmen des imprägnierten Gegenstandes, das dadurch gekennzeichnet ist, dass man das Abwaschen in einem ersten Waschbad und einem weiteren Spülbad vornimmt, wobei man dem Wasser des Spülbades ein oder mehrere oberflächenaktive Mittel zusetzt und wobei man die Wäsche im Waschbad mit Wasser durchführt, das im wesentlichen frei von oberflächenaktiven Mitteln ist oder das einen geringeren Gehalt an oberflächenaktiven Mitteln aufweist, als das Wasser des Spülbades.

Erfindungsgemäß wird ein flüssiges, wärmehärtbares Imprägniermittel eingesetzt, das im wesentlichen frei von wasserlöslichen Anteilen ist. Die Wasserlöslichkeit liegt bevorzugt bei ≤ 1 Gew.-% bevorzugt bei maximal 0,3 Gew.-% (jeweils bei 20°C). Durch den geringen Gehalt an wasserlöslichen Anteilen erreicht das Wasser des ersten Waschbades rasch einen geringen Sättigungsanteil an Imprägniermittel (beispielsweise bis maximal 0,3 Gew.-%), was überraschenderweise auch bei einem Gehalt an oberflächenaktiven Mitteln in dem Waschwasser zutrifft. Da die Imprägniermittel einen sehr geringen wasserlöslichen Anteil aufweisen, weisen die in dem Imprägniermittel enthaltenden Monomeren ähnliche Löslichkeiten auf, weswegen die abgespülten überschüssigen Imprägniermittel unverändert anfallen und aus dem Waschwasser entfernt und direkt ohne weitere Analyse oder Aufbereitung zur Imprägnierstufe zurückgeführt werden können. In dem Waschbad stellt sich ein stabiler Zustand ein, so dass ein Wechsel oder Verwerfen des Waschwassers nicht notwendig ist.

Erfindungsgemäß schließt sich dem ersten Waschvorgang ein weiterer Waschvorgang (im Folgenden als Spülen bzw. Spülvorgang bezeichnet) an, bei dem Waschwasser verwendet wird, das oberflächenaktive Mittel (z.B. Tenside) enthält. Da dem Spülvorgang bereits gewaschene Gegenstände zugeführt werden, ist der Anfall an überschüssigem Harz gering, so dass auch das weitere Waschbad im Gegensatz zu herkömmlichen Bädern langfristig ohne Erneuerung verwendbar ist. Diese Einstellung eines stabilen Zustandes erfolgt überraschenderweise trotz des Gehalts des Spülbades an oberflächenaktiven Mitteln, der beispielsweise bei 0,5 bis 7 Gew.-%, bezogen auf das gesamte Spülbad, liegt. Diese Einstellung führt dazu, dass die geringen anfallenden Mengen an restlichem überschüssigem Imprägniermittel aus dem Spülbad entfernt werden können. Dies kann dadurch gefördert werden, dass oberflächenaktive Mittel gewählt werden, die einen demulgierenden Effekt haben. Solche Mittel sind dem Fachmann geläufig.

Erfindungsgemäß schließt sich dem Spülgang die Aushärtung des Imprägniermittels in den Poren des zu imprägnierenden Gegenstandes an. Die Aushärtung kann in üblicher Weise erfolgen, beispielsweise durch Erwärmen oder mittels energiereicher Strahlung. Bevorzugt erfolgt die Aushärtung in einem Wasserbad, dem sogenannten Polymerisationsbad, das beispielsweise bei Temperaturen bis zu 90°C betrieben wird. Das in dem Polymerisationsbad verwendete Wasser kann frei von oberflächenaktiven Mitteln sein oder geringe Anteil an oberflächenaktiven Mitteln enthalten. Bestimmte imprägnierte Teile, insbesondere solche mit einer sehr großen Porosität, wie Sintermaterialien, "kochen sehr stark aus". Dies bedeutet, dass Imprägniermittel in das Wasser durch seine Ausdehnung während des Erwärmens austritt. Überschüssiges Harz aus den Poren und Reste aus dem Spülbad können aus dem Polymerisationsbad entfernt werden, beispielsweise durch Dekantier-, Zentrifugier- und/oder Filtriervorgänge.

Bevorzugt wird beim erfindungsgemäßen Verfahren dem Wasser des Waschbehälters nur eine geringe Menge an oberflächenaktiven Mitteln zugesetzt, wobei besonders bevorzugt im wesentlichen kein oberflächenaktives Mittel vorhanden ist. Die Menge liegt bevorzugt unter der im Spülbad vorhandenen Menge an oberflächenaktiven Mitteln, beispielsweise bei 0 bis 3 Gew.-% bezogen auf das Waschbad. Hierdurch wird nicht nur die Ausbildung eines stabilen Zustands des Waschbades begünstigt, sondern auch die Wiederverwendung des abgeschiedenen überschüssigen Imprägniermittels erleichtert. Aus den gleichen Gründen ist es bevorzugt, wenn das eingesetzte Imprägniermittel nur einen geringen Anteil an oberflächenaktiven Mitteln aufweist, beispielsweise 0 bis 3 Gew.-%, wobei es bevorzugt im wesentlichen frei von oberflächenaktiven Mitteln ist.

Das erfindungsgemäße Verfahren weist den Vorteil auf, dass es in üblichen Imprägnieranlagen durchgeführt werden kann, die aus einem Imprägnierbehälter, einem oder mehreren, bevorzugt einem Waschbehälter, einem oder mehreren, bevorzugt einem Spülbehälter und einer Härtungseinrichtung bestehen. Bevorzugt weisen Waschbehälter sowie Spülbehälter und Polymerisationsbehälter Einrichtungen zur Abtrennung von überschüssigem Imprägniermittel von dem in den Behältern enthaltenen Wasser auf, beispielsweise Dekantier- oder Zentrifugiereinrichtungen. Das Polymerisationsbad ist zur Abtrennung von aus den imprägnierten Gegenständen ausgekochtem Harz, welches polymerisieren kann, bevorzugt mit einer Filtereinrichtung ausgestattet.

Die Erfindung betrifft daher auch eine Vorrichtung zur Durchführung des Verfahrens mit einem Behälter zur Imprägnierung, mindestens einem Behälter zur Aufnahme eines Waschbades, mindestens einem Behälter zur Aufnahme eines Spülbades und Einrichtungen zum Aushärten, die dadurch gekennzeichnet ist, dass der Behälter zur Aufnahme des Waschbades übliche Einrichtungen zum Dekantieren und/oder Zentrifugieren und der Behälter zur Aufnahme des Spülbades übliche Einrichtungen zum Filtrieren, Dekantieren und/oder Zentrifugieren aufweisen und wobei der Behälter zur Imprägnierung ein flüssiges, wärmehärtbares Imprägniermittel enthält, das im Wesentlichen frei von wasserlöslichen Anteilen ist. Gemäß einer bevorzugten Ausführungsform weist der Behälter zur Aufnahme des Waschbades Einrichtungen zur Rückführung von abgeschiedenem Imprägniermittel zum Imprägnierbehälter auf.

Bei dem Imprägnierbehälter kann es sich um einen üblichen Behälter zur Aufnahme des Imprägniermittels handeln. Die Imprägnierung kann durch einfaches Tauchen, Anlegen von Druck oder Vakuum erfolgen. Bevorzugt handelt es sich bei dem Imprägnierbehälter um einen üblichen Autoklaven, in dem Vakuumimprägnierungen durchgeführt werden können. Hierzu werden die zu imprägnierenden porösen Gegenstände in den leeren Autoklaven eingebracht. Nach Anlegen eines Vakuums bis etwa ≤ 10 mbar wird das Imprägniermittel in den Autoklaven geflutet. Anschließend wird das Vakuum aufgehoben; durch die Druckdifferenz von Vakuum und Atmosphärendruck dringt das Harz in die Poren der zu imprägnierenden Gegenstände ein.

Nach der Imprägnierung werden die Gegenstände dem Autoklaven entnommen und einem ersten wässrigen Waschbad zugeführt. Die Wäsche kann unter Bewegung und Temperaturerhöhung durch geführt werden. Bei dem Behälter des Waschbades handelt es sich um einen hierfür üblichen Behälter, beispielsweise für das übliche Drehwaschen, die Spritzreinigung oder Tauchreinigung.

Die imprägnierten Gegenstände werden dann in das Spülbad eingebracht, das ein oder mehrere oberflächenaktive Mittel enthält, um einen möglicherweise an der Oberfläche verbliebenen leichten Film zu entfernen. Auch das Spülen kann gegebenenfalls unter Temperaturerhöhung und Bewegen erfolgen. Wie im Falle des Waschbades wird das Spülen in einem üblichen Behälter durchgeführt, wie er im Stand der Technik beispielsweise für das Drehwaschen, die Spritz- oder Tauchreinigung verwendet wird. Sowohl der Behälter für das Waschen, als auch der für das Spülen können mit üblichen Einrichtungen zum Rühren oder Erwärmen ausgerüstet sein, um die Reinigungsleistung zu unterstützen.

In der einen Gegenstand der Erfindung bildenden Vorrichtung sind sowohl Waschbehälter, Spülbehälter, als auch gegebenenfalls der Polymerisationsbehälter mit einem üblichen Schwerkraftabscheider (Dekantiervorrichtung) und/oder einer üblichen Zentrifugiervorrichtung ausgerüstet, in denen das Wasch-, Spül- und Polymerisationswasser bzw. Teile davon, von Imprägniermittelüberschüssen befreit werden können. Es handelt sich dabei um übliche, dem Fachmann geläufige Vorrichtungen. Der Spülbehälter und der Polymerisationsbehälter können statt dessen oder zusätzlich mit einer üblichen Filtriereinrichtung versehen sein.

Nach dem Waschen und Spülen werden die imprägnierten Gegenstände dem Härtungsvorgang für die Imprägniermittel zugeführt. Die Härtung erfolgt bevorzugt durch Erwärmen; es kann jedoch auch mittels energiereicher Strahlung, wie Elektronenstrahlung, UV-Licht oder Röntgenstrahlung gehärtet werden. Bevorzugt erfolgt die Härtung in einem Wasserbad, dem sogenannten Polymerisationsbad, das beispielsweise bei Temperaturen bis zu 90°C betrieben wird. Die Härtungszeiten liegen beispielsweise bei 5 bis 20 min. je nach Masse und Wärmeleitung des zu imprägnierenden Teils. In dem Wasserbad können gleichzeitig letzte Tensid-Imprägniermittelanteile abgespült werden.

Bei den Härtungseinrichtungen handelt es sich um übliche im Stand der Technik für diesen Zweck verwendete Vorrichtungen, wie übliche Polymerisationsbäder, sowie Einrichtungen für die Härtung zur Elektronenstrahlung, durch UV-Licht oder Röntgenstrahlung.

Erfindungsgemäß fällt im ersten, mit Wasser betriebenen Waschbad das Imprägniermittel in praktisch unveränderten Zustand an. Es kann aus dem Wasser in üblicher Weise abgetrennt werden, beispielsweise durch Dekantieren in einem Schwerkraftabscheider und/oder durch Zentrifugieren. Das aus dem ersten Waschbad abgetrennte Imprägniermittel kann ohne Analyse und ohne weitere Aufbereitung zum Imprägnierschritt recyclisiert werden.

Im Spülbad werden die Reste des überschüssigen Imprägniermittels mit einem oberflächenaktive Mittel enthaltenden Waschwasser abgespült. Das aus dem Spülbad abgetrennte Imprägniermittel ist tensidhaltig und kann daher nicht direkt recyclisiert werden. Da es nur in geringen Anteilen anfällt, kann es verworfen werden.

Wird die Aushärtung in einem Polymerisationsbad durchgeführt, so kann dieses ebenfalls mit Einrichtungen zur Abtrennung von aufschwimmendem Imprägniermittel versehen sein, beispielsweise mit einem Schwerkraftabscheider und/oder Filtern. Gegebenenfalls hier noch abgetrenntes Harz wird verworfen.

Erfindungsgemäß werden Imprägniermittel eingesetzt, die im wesentlichen in Wasser unlöslich sind. Der Anteil an wasserlöslichen Bestandteilen liegt bevorzugt bei ≤ 1 Gew.-% besonders bevorzugt bei maximal 0,3 Gew.-% (jeweils bei 20°C).

Als Imprägniermittel können übliche radikalisch polymersierbare flüssige Monomere, Oligomere und/oder Polymere eingesetzt werden. Bevorzugt sind (Meth) acrylate (der Ausdruck (Meth)acryl bedeutet Methacryl und/oder Acryl); sowie ungesättigte Polyester, Maleinate, Acrylamide oder ähnliche Verbindungen, sowie Gemische davon, die in Wasser im wesentlichen unlöslich sind. Es können die dem Fachmann für Imprägnierzwekke bekannten üblichen Mittel eingesetzt werden, sofern sie im wesentlichen in Wasser unlöslich sind.

Bevorzugte Imprägniermittel sind (Meth)acrylate bzw. (Meth)acrylsäureester wie sie in der Literatur für die radikalische Polymerisation und insbesondere als Imprägniermittel beschrieben werden, wobei sie so auszuwählen sind, dass im wesentlichen keine Wasserlöslichkeit vorliegt. Unter (Meth)acryl ist hier Acryl und/oder Methacryl zu verstehen. Beispiele für verwendbare monofunktionelle Monomere sind Alkylester und Cycloalkylester von (Meth)acrylsäure, wie Hexylacrylat, Hexylmethacrylat, Isooctylacrylat, Laurylacrylat, Laurylmethacrylat, Tridecylacrylat, Tridecylmethacrylat, Octadecylacrylat, Stearylacrylat, Caprolactonacrylat, sowie Cyclohexylacrylat und Cyclohexylmethacrylat.

Es ist zweckmäßig übliche di- und/oder polyfunktionelle Monomere mitzuverwenden; diese können beispielsweise zur Verbesserung der Chemikalienbeständigkeit bzw. Temperaturbeständigkeit dienen. Beispiele sind Tetraethylenglykoldiacrylat, Triethylenglykoldiacrylat, Trimethylolpropantrimethacrylat. Sie werden beispielsweise in Mengen von 0,1 bis 30 Gew.-%, bezogen auf die gesamten Monomeren verwendet.

Die (Meth)acrylate können allein oder im Gemisch eingesetzt werden. Sie können auch im Gemisch mit unlöslichen radikalisch polymerisierbaren Monoestem, Maleinaten, Acrylamiden oder ähnlichen unlöslichen Verbindungen, die radikalisch mit (Meth)acrylaten reagieren können, verwendet werden.

Zur Aushärtung der radikalisch polymerisierbaren Imprägnierungsmittel können übliche Katalysatoren, wie dem Fachmann geläufige Azokatalysatoren, wie zum Beispiel Azodiisobutyronitril sowie übliche Peroxidkatalysatoren, wie beispielsweise Benzoylperoxid, Methylethylketonperoxid, Cumolhydroperoxid zugesetzt werden. Die Mengen der zugesetzten Katalysatoren liegen in üblichen Bereichen, beispielsweise bei 0,1 bis 5 Gew.-%. Die Katalysatoren werden dem Imprägniermittel und gegebenenfalls auch dem aus der Wascheinrichtung mit Wasser rückgeführten Imprägniermittel zugesetzt.

Dem Imprägniermittel können zur Verbesserung der Lagerstabilität sowie gegebenenfalls zur Komplexbildung übliche Stabilisatoren zugesetzt werden, zum Beispiel Hydrochinone, substituierte Hydrochinone und Alkylphenole; Beispiele sind tert-Butylhydrochinon, 2.6-Di-tert-buty-14-methylphenol, sowie die Handelsprodukte Irganox 245^{®}, Irganox 1010^{®} oder Irganox ND 1024^{®}. Sie werden in üblichen Mengen zugefügt, beispielsweise 0,01 bis 2 Gew.% Inhibitor.

Dem Spülbad werden erfindungsgemäß oberflächenaktive Mittel, wie Emulgiermittel, Benetzungsmittel, Detergentien und/oder Tenside zugesetzt, wie sie beispielsweise im Stand der Technik für den ersten Waschvorgang, in Entfettungsanlagen oder als Zusatz zu den Imprägniermitteln verwendet werden können. Die Wahl erfolgt zweckmäßig je nach der speziellen Zusammensetzung des Imprägniermittels, sowie nach der Anforderung and die Entfettungsleistung. Es können anionische, kationische oder nichtionische oberflächenaktive Mittel eingesetzt werden. Besonders geeignet sind nichtionische oberflächenaktive Mittel, insbesondere die dem Fachmann geläufigen ethoxylierten und propoxylierten oberflächenaktiven Mittel vom Alkoholtyp. Handelsübliche Beispiele sind Surtec 120^{®} und Dansoclean A 2104^{®}. Ein bevorzugtes oberflächenaktives Mittel ist auch Natriummetasilikat. Gegebenenfalls können die oberflächenaktiven Mittel mit üblichen Additiven eingesetzt werden, die z.B. zur Verbesserung des Korrosionsschutzes oder der Entfettungsleistung bekannt sind. Falls den erfindungsgemäß eingesetzten Imprägniermitteln oder dem Waschwasser des Waschbehälters oberflächenaktive Mittel zugesetzt werden, so sind dies beispielsweise die vorstehend erwähnten.

Durch die erfindungsgemäße Verfahrensweise wird es möglich, poröse Gegenstande zu imprägnieren. Beispiele hierfür sind Metallgussteile oder Metallsinterteile, wie beispielsweise Kraftfahrzeugmotoren, Armaturen, sowie Mineralstoffgemische, beispielsweise Gegenstände aus Beton, jedoch auch andere Materialien wie beispielsweise Holz. Das Verfahren führt zu stabilen Imprägnierungen. Es weist den Vorteil auf, dass sich die verwendeten Bäder durch den Ein- und Austrag der zu imprägnierenden Gegenstände auf einen stabilen Zustand eintellen, so dass ein Wasserwechsel entfallen kann und die Anlage abwasserfrei arbeitet. Ein regelmäßiges Wechseln der Bäder, wie es im Stand der Technik notwendig war, sowie die Einleitung von Wasser in die Kanalisation werden hierdurch vermieden. Darüber hinaus kann überschüssiges, an der Oberfläche der zu imprägnierenden Gegenstände aus dem Imprägnierbad mitgeschlepptes Imprägniermittel ohne Arbeitsaufwand und ohne Verluste an Bestandteilen recyclisiert werden.

### Beispiel

Eine Mischung aus 57,45 Gew.-% Laurylmethacrylat, 40 Gew.-% Tridecylmethacrylat und 2 Gew.-% Triethylenglykoldiacrylat, 0,4 Gew.-% Azodiisobutyronitril und 0,15 Gew.-% Irganox ^{®} 1010 (Alkylphenolstabilisator) wurde erstellt. Aluminiumsinterringe, mit einer Porosität von ca. 10-20 % wurden im Vakuum imprägniert. Dann wurde die Oberfläche in einem ersten Waschbad mit Wasser abgewaschen und in einem zweiten Spülbad, unter Zugabe von 0,5 Gew.-% handelsüblichem Tensid, wurde der Rest der Monomeren von der Oberfläche abgewaschen. Die Polymerisation in den Poren erfolgte 10 Minuten bei etwa 90°C in Wasser. Der Imprägnierprozeß erfolgte insgesamt zweimal. Nach der Entnahme der Sinterringe aus dem heißen Wasser war die Oberfläche ohne Harzrückstände.

Das Abdichtergebnis wurde nach dem Abkühlen der Sinterringe überprüft, es waren bei 5 bar, Luft unter Wasser, keine undichten Stellen erkennbar.

Eine Temperaturbelastung von 24 Stunden bei 200°C erbrachte keine Veränderung des Abdichtergebnisses.

Eine erfindungsgemäße Versuchsanlage konnte unter Verwendung eines Imprägniermittels, das 2 Gew.-% handelsübliches Tensid enthielt, länger als 3 Monate betrieben werden, ohne dass ein Badwechsel erforderlich wurde.

## Patentansprüche

1. Verfahren zum Imprägnieren eines Poren aufweisenden Gegenstandes durch Einbringen eines flüssigen, wärmehärtbaren Imprägniermittels, das im Wesentlichen frei von wasserlöslichen Anteilen ist, in die Poren, Abwaschen von überschüssigem Imprägniermittel von der Oberfläche mit Wasser und Aushärten des Imprägniermittels durch Erwärmen des imprägnierten Gegenstandes, **dadurch gekennzeichnet, dass** man das Abwaschen in einem ersten Waschbad und einem weiteren Spülbad vornimmt, wobei man dem Wasser des Spülbades ein oder mehrere oberflächenaktive Mittel zusetzt und wobei man die Wäsche im Waschbad mit Wasser durchführt, das im Wesentlichen frei von oberflächenaktiven Mitteln ist oder das eine geringere Menge an oberflächenaktiven Mitteln enthält als das Waser des Spülbades.

2. Verfahren nach Anspruch 1, **dadurch gekennzeichnet, dass** man das von der Oberfläche abgewaschene überschüssige Imprägniermittel aus dem Waschbad zurückgewinnt und zur Imprägnierung wiederverwendet.

3. Verfahren nach Anspruch 2, **dadurch gekennzeichnet, dass** man das überschüssige Imprägniermittel durch Dekantieren und/oder Zentrifugieren aus dem Waschbad zurückgewinnt.

4. Verfahren nach einem der vorhergehenden Ansprüche, **dadurch gekennzeichnet, dass** man ein Imprägniermittel verwendet, das im Wesentlichen frei von oberflächenaktiven Mitteln ist.

5. Verfahren nach einem der vorhergehenden Ansprüche, **dadurch gekennzeichnet, dass** man ein Imprägniermittel verwendet, das ein oder mehrere wasserunlösliche Acrylate und/oder Methacrylate enthält.

6. Verfahren nach einem der vorhergehenden Ansprüche, **dadurch gekennzeichnet, dass** man überschüssiges Imprägniermittel aus dem Spülbad durch Dekantieren und/oder Zentrifugieren entfernt.

7. Verfahren nach einem der Ansprüche 1 bis 6, bei dem das Aushärten in Wasser erfolgt, **dadurch gekennzeichnet, dass** man dem Wasser ein oder mehrere oberflächenaktive Mittel zusetzt.

8. Vorrichtung zur Durchführung des Verfahrens nach einem der Ansprüche 1 bis 7 mit einem Behälter zur Imprägnierung, einem Behälter zur Aufnahme eines Waschbades, einem Behälter zur Aufnahme eines Spülbades und Einrichtungen zum Aushärten, **dadurch gekennzeichnet, dass** der Behälter zur Aufnahme des Waschbades übliche Einrichtungen zum Dekantieren und/oder Zentrifugieren und der Behälter zur Aufnahme des Spülbades übliche Filter-, Dekantier-und/oder Zentrifugiereinrichtungen aufweisen und wobei der Behälter zur Imprägnierung ein flüssiges, wärmehärtbares Imprägniermittel enthält, das im Wesentlichen frei von wasserlöslichen Anteilen ist.

9. Vorrichtung nach Anspruch 8, **dadurch gekennzeichnet, dass** der Behälter zur Aufnahme des Waschbades Einrichtungen zur Rückführung von abgeschiedenem Imprägniermittel zum Imprägnierbehälter aufweist.

## Claims

1. Process for impregnating an article having pores by introducing into the pores a liquid thermosetting impregnating agent which is substantially free of water-soluble components, washing off excess impregnating agent from the surface with water and curing the impregnating agent by heating the impregnated article, **characterised in that** the washing off is effected in a first washing bath and in an additional rinsing bath, wherein one or more surfactants are added to the water of the rinsing bath and wherein washing is done in the washing bath using water which is substantially free of surfactants or which contains a smaller quantity of surfactants than the water of the rinsing bath.

2. Process according to claim 1, **characterised in that** the excess impregnating agent washed off the surface is recovered from the washing bath and reused for impregnation.

3. Process according to claim 2, **characterised in that** the excess impregnating agent is recovered by decanting and/or centrifuging.

4. Process according to one of the preceding claims, **characterised in that** an impregnating agent is used which is substantially free of surfactants.

5. Process according to one of the preceding claims, **characterised in that** an impregnating agent is used which contains one or more substantially water-insoluble acrylates and/or methacrylates.

6. Process according to one of the preceding claims, **characterised in that** excess impregnating agent is removed from the rinsing bath by decanting and/or centrifuging.

7. Process according to one of the claims 1 to 6, wherein curing takes place in water, **characterised in that** one or more surfactants are added to the water.

8. Apparatus for carrying out the process according to one of the claims 1 to 7, with a container for impregnating, a container for accommodating a washing bath, a container for accommodating a rinsing bath and devices for curing, **characterized in that** the container for accommodating the washing bath has commonly used devices for decanting and/or centrifuging, and the container for accommodating the rinsing bath has commonly used filtering, decanting and/or centrifuging devices, and wherein the container for impregnating contains a liquid heat-curable impregnating agent which is substantially free of water-soluble components.

9. Apparatus according to claim 8, **characterised in that** the container for accommodating the washing bath has devices for returning separated impregnating agent to the impregnating container.

## Revendications

1. Procédé pour imprégner un objet présentant des pores par l'introduction d'un agent d'imprégnation thermodurcissable, liquide, qui est substantiellement exempt d'ingrédients solubles dans l'eau, dans les pores, le lavage de l'agent d'imprégnation excédentaire de la surface avec de l'eau, et le durcissement de l'agent d'imprégnation par chauffage de l'objet imprégné, **caractérisé en ce que** le lavage est effectué dans un premier bain de lavage et dans un bain de rinçage supplémentaire, dans lequel l'eau du bain de rinçage est additionnée d'un ou de plusieurs agents tensioactifs, et dans lequel le lavage dans le bain de lavage est effectué avec de l'eau qui est substantiellement exempte d'agents tensioactifs ou qui contient une quantité d'agents tensioactifs inférieure à celle de l'eau du bain de rinçage.

2. Procédé selon la revendication 1, **caractérisé en ce que** l'agent d'imprégnation excédentaire lavé de la surface est récupéré à partir du bain de lavage et réutilisé pour l'imprégnation.

3. Procédé selon la revendication 2, **caractérisé en ce que** l'agent d'imprégnation excédentaire est récupéré à partir du bain de lavage par décantation et/ou centrifugation.

4. Procédé selon l'une quelconque des revendications précédentes, **caractérisé en ce qu'**un agent d'imprégnation est utilisé qui est substantiellement exempt d'agents tensioactifs.

5. Procédé selon l'une quelconque des revendications précédentes, **caractérisé en ce qu'**un agent d'imprégnation est utilisé qui contient un ou plusieurs acrylates et/ou méthacrylates substantiellement insolubles dans l'eau.

6. Procédé selon l'une quelconque des revendications précédentes, **caractérisé en ce que** l'agent d'imprégnation excédentaire est retiré du bain de rinçage par décantation et/ou centrifugation.

7. Procédé selon l'une quelconque des revendications à 6, dans lequel le durcissement a lieu dans l'eau, **caractérisé en ce que** l'eau est additionnée d'un ou de plusieurs agents tensioactifs.

8. Dispositif pour exécuter le procédé selon l'une quelconque des revendications 1 à 7 avec un récipient pour l'imprégnation, un récipient destiné à recevoir un bain de lavage et un récipient destiné à recevoir un bain de rinçage, characterisé en ce que le récipient destiné à recevoir le bain de lavage et le récipient destiné à recevoir le bain rinçage présentent des équipements usuels de filtration, de décantation et/ou de centrifugation et le récipient pour l'imprégnation contient un agent à imprégner liquide thermodurcissable qui est substaniellement dépourvu de parties hydrosolubles.

9. Dispositif selon la revendication 8, **caractérisé en ce que** le récipient destiné à recevoir le bain de lavage présente des équipements pour le recyclage de l'agent d'imprégnation précipité vers le récipient d'imprégnation.
